# EUROPÄISCHE PATENTANMELDUNG

(11) **EP 4 613 563 A1**
(43) Veröffentlichungstag der Anmeldung: **10.09.2025**
(21) Anmeldenummer: 25159026.1
(22) Anmeldetag: 20.02.2025
(51) Int. Cl.: B60R 13/08, B62D 33/067

(54) **NUTZFAHRZEUG MIT EINER MOTORABDECKUNG ZUR REDUZIERUNG VON MOTORGERÄUSCHEN**

(30) Priorität: 06.03.2024 DE 102024106464
(71) Anmelder: MAN Truck & Bus SE, 80995 München (DE)
(72) Erfinder: Adolphsen, Sönke, 80995 München (DE); Kopp, Alexander, 80995 München (DE); Bittl, Klaus, 85221 Dachau (DE)

(57) **Zusammenfassung**

Die Erfindung betrifft ein Nutzfahrzeug (10), aufweisend einen Leiterrahmen (12) mit zwei Hauptlängsträger (12.1, 12.2), ein Fahrerhaus (14), das vom Leiterrahmen (12) getragen ist, eine Motoreinrichtung (15), die unterhalb des Fahrerhauses (14) angeordnet ist und eine zwischen dem Fahrerhaus (14) und der Motoreinrichtung (15) angeordnete Motorabdeckung (16) zur Reduzierung von Motorgeräuschen zum Fahrerhaus (14) hin. Weiterhin weist das Nutzfahrzeug (10) mindestens eine Motorabdeckungshalterung (18.1, 18.2, 18.3, 18.4) auf, die am Leiterrahmen (12) befestigt ist und an welcher die Motorabdeckung (16) lösbar gehalten ist. Ferner betrifft die Erfindung ein Verfahren zum Inspizieren einer Motoreinrichtung (15) eines ebensolchen Nutzfahrzeugs (10).

## Beschreibung

Die Erfindung betrifft ein Nutzfahrzeug mit einer Motoreinrichtung sowie einer Motorabdeckung zur Reduzierung von Motorgeräuschen. Ferner betrifft die Erfindung ein Verfahren zum Inspizieren einer Motoreinrichtung eines ebensolchen Nutzfahrzeugs.

Im Stand der Technik ist das Anbringen von geräuschdämmenden Elementen an Fahrzeugen grundsätzlich bekannt. In der Regel sollen dadurch Motorengeräusche ins Fahrzeuginnere bzw. nach außen vermindert werden, bspw. um dadurch die Akustik im Fahrzeuginnenraum zu verbessern bzw. gesetzliche Außengeräuschgrenzwerte einzuhalten.

Problematisch in diesem Zusammenhang ist allerdings, dass der in der Regel beengte Bauraum in den Fahrzeugen, insbesondere bei Lastkraftwagen mit kippbarem Fahrerhaus, einer Anbringung von ausgedehnten Dämmstrukturen entgegensteht. Ferner muss für Kontroll- und/oder Wartungsarbeiten weiterhin eine ausreichende Zugänglichkeit des Motors bzw. dessen Komponenten, wie bspw. der Ölpeilstab, sichergestellt sein. Speziell im Fall von Lastkraftwagen oder Sattelzugmaschinen, welche im Betrieb oftmals weite Distanzen zurücklegen, muss bspw. auch die Motorennummer für eine mögliche Inaugenscheinnahme durch den Zoll leicht inspizierbar sein. Letztlich sind auch das Crashverhalten und Homologationsaspekte bei der Anbringung geräuschdämmender Elemente zu berücksichtigen.

Bei den bisherigen Ansätzen zur Motorengeräuschreduzierung werden die oben genannte Punkte oft nicht zufriedenstellend gelöst.

Aufgabe der Erfindung ist es, eine verbesserte Lösung zur Reduzierung von Motorengeräusche eines Kraftfahrzeugs bereitzustellen. Bevorzugt ist es eine Aufgabe der Erfindung, eine Lösung bereitzustellen, mittels derer Motorengeräusche abgeschirmt werden können, zugleich aber eine ausreichende Zugänglichkeit des Motors sichergestellt ist.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden im Folgenden unter teilweiser Bezugnahme auf die Figuren näher erläutert.

Gemäß einem ersten unabhängigen Aspekt der vorliegenden Offenbarung wird ein Nutzfahrzeug bereitgestellt. Lediglich beispielhaft kann es sich bei dem Nutzfahrzeug um einen Lastkraftwagen oder eine Sattelzugmaschine handeln.

Das Nutzfahrzeug weist einen Leiterrahmen auf. Dieser kann zwei (z. B. parallele) Hauptlängsträger (z. B. Profilträger, insbesondere C-Profilträger) aufweisen. Ferner kann der Leiterrahmen mehrere Querträger aufweisen, welche die zwei Hauptlängsträger miteinander verbinden.

Das Nutzfahrzeug weist weiterhin ein (z. B. kippbares) Fahrerhaus auf, das vom Leiterrahmen getragen ist.

Ferner weist das Nutzfahrzeug eine Motoreinrichtung (z. B. Brennkraftmaschine) auf, wobei die Motoreinrichtung unterhalb (z. B. direkt unterhalb) des Fahrerhauses (z. B. unterhalb eines Fahrerhausbodens des Fahrerhauses) angeordnet ist.

Weiterhin weist das Nutzfahrzeug eine (z. B. schalldämmende und/oder schalldämpfende) Motorabdeckung zur Reduzierung von Motorgeräuschen zum Fahrerhaus hin und/oder zur Reduzierung von Motorgeräuschen zur Umgebung des Nutzfahrzeugs hin auf. Entsprechend kann die Motorabdeckung zur Reduzierung von Motorgeräuschen zum Fahrerhaus und/oder zur Umgebung hin angeordnet und/oder ausgebildet sein. Bevorzugt ist die Motorabdeckung dabei zwischen dem Fahrerhaus und der Motoreinrichtung angeordnet, bspw. unterhalb des Fahrerhauses und/oder oberhalb der Motoreinrichtung.

Das Nutzfahrzeug weist zudem mindestens eine (z. B. metallische) Motorabdeckungshalterung auf. Die mindestens eine Motorabdeckungshalterung ist hierbei (z. B. direkt) am Leiterrahmen (z. B. an einem oder beiden der zwei Hauptlängsträger) befestigt (z. B. angeschraubt und/oder angenietet). Ferner ist an der mindestens einen Motorabdeckungshalterung die Motorabdeckung (z. B. mittels eines oder mehrerer Schnellverschlüsse) lösbar gehalten. Entsprechend kann die Motorabdeckung von der mindestens einen Motorabdeckungshalterung, insbesondere ohne Beschädigung der Bauteile, (z. B. reversibel) trennbar sein und erneut fixierbar sein.

Auf vorteilhafte Weise können dadurch insgesamt Motorengeräusche zum Fahrerhaus reduziert werden und die Akustik im Fahrerhausinnenraum verbessert werden, während der Motorraum durch die Lösbarkeit der Motorabdeckung im Servicefall, z. B. für Wartungs- und Reparaturarbeiten, leicht zugänglich ist. Durch die chassisfeste Halterung der Motorabdeckung am Leiterrahmen, kann zudem auf vorteilhafte Weise eine möglichst sichere und stabile Lagerung der Motorabdeckung bereitgestellt werden.

Gemäß einem ersten Aspekt kann die Motorabdeckung mittels zumindest eines Schnellverschlusses (z. B. mittels zumindest eines Vierteldreh-Schnellverschlusses) mit der mindestens einen Motorabdeckungshalterung lösbar verbunden sein. Bevorzugt ist der zumindest eine Schnellverschluss dabei unverlierbar an der Motorabdeckung angebracht. Entsprechend kann der zumindest eine Schnellverschluss somit auch im gelösten Zustand mit der Motorabdeckung (z. B. über ein Sicherungselement gegen ein Verlieren) verbunden sein. Auf vorteilhafte Weise kann dadurch eine schnell lösbare Verbindung zwischen Motorabdeckung und mindestens einer Motorabdeckungshalterung bereitgestellt werden.

In einer bevorzugten Ausführungsform kann der zumindest eine Schnellverschluss einen Profilabschnitt (z. B. einen Sechskantkopf-Profilabschnitt) zum Ansetzen eines Werkzeugs (z. B. eines Schraubenschlüssels) zum Lösen und/oder Arretieren des zumindest einen Schnellverschlusses aufweisen. Beispielsweise kann der zumindest eine Schnellverschluss mittels des an dem Profilabschnitt angesetzten Werkzeugs zwischen einer ersten (z. B. arretierten) und zweiten (z. B. gelösten) Position (z. B. um eine Vierteldrehung) drehbar sein. Auf vorteilhafte Weise kann dadurch eine möglichst sichere lösbare Anbringung der Motorabdeckung sichergestellt werden.

Alternativ dazu kann der zumindest eine Schnellverschluss - bspw. in einer anderen Ausführungsform - auch werkzeuglos und/oder händisch von der mindestens einen Motorabdeckungshalterung lösbar sein. Bevorzugt soll hier die Verbindung zwischen der Motorabdeckung und der mindestens einen Motorabdeckungshalterung somit ohne Zuhilfenahme von Werkzeug, d. h. mit der bloßen Hand, lösbar sein. Zudem oder alternativ kann die Motorabdeckung auch wieder werkzeuglos und/oder händisch mit der mindestens einen Motorabdeckungshalterung verbindbar sein. Auf vorteilhafte Weise kann dadurch eine möglichst einfache Montage bzw. Demontage der Motorabdeckung sichergestellt werden.

Nach einem weiteren Aspekt kann das Fahrerhaus kippbar sein. Beispielsweise kann das Fahrerhaus zwischen einer (z. B. vertikalen) Betriebsposition und einer (z. B. nach vorne gekippten) Wartungsposition (z. B. um eine entlang der Fahrzeugquerachse orientierte Kippachse) schwenkbar sein. Bevorzugt kann die gelöste Motorabdeckung bei aufgekipptem Fahrerhaus (z. B. in der Wartungsposition) aus dem Nutzfahrzeug (z. B. vollständig) entnehmbar (z. B. heraushebbar) sein. Auf vorteilhafte Weise kann dadurch eine ausreichende Erreichbarkeit bzw. Zugänglichkeit der Motoreinrichtung, z. B. für Wartungs- und Reparaturarbeiten, sichergestellt werden.

Gemäß einem weiteren Aspekt kann die Motorabdeckung schalldämmend und/oder schalldämpfend sein und/oder wirken. Beispielsweise kann die Motorabdeckung ausgebildet sein, eine Ausbreitung von Schall (z. B. durch Reflexion) zu behindern und/oder Schall zu absorbieren, bspw. in eine nicht hörbare Energieform umzuwandeln.

Nach einem weiteren Aspekt kann die Motorabdeckung mineralischen Fasern, (z. B. Glaswolle und/oder Steinwolle) aufweisen. Beispielweise kann die Motorabdeckung mineralische Fasern umfassen, welche mittels Kleber und/oder Kunstharz zu einem Formteil (z. B. einer Matte) verpresst sind. Auf vorteilhafte Weise kann dadurch ein gute schalldämmende und/oder schalldämpfende Wirkung erzielt werden.

Gemäß einem weiteren Aspekt kann die Motorabdeckung ausschließlich oder im Wesentlichen zur Reduzierung von Motorgeräuschen zum Fahrerhaus hin und/oder zur Umgebung hin dienen. Entsprechend soll die Motorabdeckung bevorzugt keine weitere Funktion als die der Schallreduzierung bzw. Schallisolierung erfüllen.

Nach einem weiteren Aspekt kann die mindestens eine Motorabdeckungshalterung einen (z. B. im Wesentlichen horizontalen) Halteschienenabschnitt aufweisen, auf dem die gelöste Motorabdeckung (z. B. kippbar) aufliegt oder (z. B. kippbar) auflegbar ist. Beispielsweise kann der Halteschienenabschnitt ausgebildet sein, die gelöste Motorabdeckung zu tragen und/oder gegen ein Herabfallen zu sichern. Auf vorteilhafte Weise kann dadurch ein sicheres Lösen der gesamten Motorabdeckung ermöglicht werden.

Nach einem weiteren Aspekt können die zwei Hauptlängsträger des Leiterrahmens einen ersten (z. B. linken) Hauptlängsträger und einen (z. B. zum ersten Hauptlängsträger parallelen) zweiten (z. B. rechten) Hauptlängsträger aufweisen. Weiterhin kann die mindestens eine Motorabdeckungshalterung eine erste (z. B. linke) Motorabdeckungshalterung und eine zweite (z. B. rechte) Motorabdeckungshalterung aufweisen. Die erste Motorabdeckungshalterung kann dabei am ersten Hauptlängsträger und die zweite Motorabdeckungshalterung am zweiten Hauptlängsträger (z. B. gegenüberliegend zur ersten Motorabdeckungshalterung) befestigt sein. Entsprechend kann die Motorabdeckung über die erste und zweite Motorabdeckungshalterung sowohl vom ersten als auch zweiten Hauptlängsträger getragen sein. Bevorzugt überspannt dabei die Motorabdeckung einen Zwischenraum zwischen dem ersten Hauptlängsträger und dem zweiten Hauptlängsträger, wobei vorzugsweise in dem Zwischenraum die Motoreinrichtung angeordnet ist. Auf vorteilhafte Weise kann dadurch eine sichere bzw. mehrseitige Anbindung der Motorabdeckung realisiert werden.

Gemäß einem weiteren Aspekt können die erste (z. B. linke) Motorabdeckungshalterung (z. B. ein erster Halteschienenabschnitt der ersten Motorabdeckungshalterung) und die zweite (z. B. rechte) Motorabdeckungshalterung (z. B. ein zweiter Halteschienenabschnitt der zweiten Motorabdeckungshalterung) ausgebildet sein, dass die gelöste Motorabdeckung unter Abstützung auf der ersten (z. B. linken) Motorabdeckungshalterung (z. B. auf deren ersten Halteschienenabschnitt) von der zweiten Motorabdeckungshalterung (z. B. zur linken Nutzfahrzeugseite hin) wegkippbar ist. Hierbei kann die gelöste Motorabdeckung bspw. um eine im Bereich der ersten (z. B. linken) Motorabdeckungshalterung angeordnete und parallel zur Fahrzeuglängsachse verlaufende (z. B. virtuelle) erste Schwenkachse schwenkbar sein.

Zudem oder alternativ können die erste (z. B. linke) Motorabdeckungshalterung (z. B. ein erster Halteschienenabschnitt der ersten Motorabdeckungshalterung) und die zweite (z. B. rechte) Motorabdeckungshalterung (z. B. ein zweiter Halteschienenabschnitt der zweiten Motorabdeckungshalterung) ausgebildet sein, dass die gelöste Motorabdeckung unter Abstützung auf der zweiten (z. B. rechten) Motorabdeckungshalterung (z. B. auf deren zweiten Halteschienenabschnitt) von der ersten Motorabdeckungshalterung (z. B. zur rechten Nutzfahrzeugseite hin) wegkippbar ist. Hierbei kann die gelöste Motorabdeckung bspw. um eine im Bereich der zweiten (z. B. rechten) Motorabdeckungshalterung angeordnete und parallel zur Fahrzeuglängsachse verlaufende (z. B. virtuelle) zweite Schwenkachse schwenkbar sein. Auf vorteilhafte Weise kann dadurch insgesamt auch bei nicht vollständigem Ausbau der Motorabdeckung aus dem Nutzfahrzeug eine ausreichende Zugänglichkeit der Motoreinrichtung sichergestellt werden.

Nach einem weiteren Aspekt kann die Motorabdeckung (z. B. ausschließlich) von der mindestens einen Motorabdeckungshalterung getragen sein. Beispielsweise kann sich die Motorabdeckung auf der mindestens einen Motorabdeckungshalterung abstützen. Auf vorteilhafte Weise kann dadurch eine möglichst einfache Montage der Motorabdeckung sichergestellt werden.

Zudem oder alternativ kann die Motorabdeckung oberhalb der Motoreinrichtung angeordnet sein. Beispielsweise kann die Motorabdeckung die Motoreinrichtung von oben (z. B. vollständig) überdecken. Auf vorteilhafte Weise kann dadurch eine zuverlässige Schallabschirmung zum Arbeitsplatz des Fahrzeugführers erreicht werden.

Zudem oder alternativ kann die Motorabdeckung unterhalb eines Fahrerhausbodens des Fahrerhauses angeordnet sein. Entsprechend kann das Fahrerhaus einen das Fahrerhaus nach unten abschließenden und/oder begrenzenden Fahrerhausboden aufweisen. Auch dadurch kann auf vorteilhafte Weise eine zuverlässige Schallabschirmung zum Arbeitsplatz des Fahrzeugführers erreicht werden.

Zudem oder alternativ kann die Motorabdeckung von der mindestens einen Motorabdeckungshalterung beabstandet von dem Leiterrahmen und/oder von der Motoreinrichtung und/oder von dem Fahrerhaus gehalten sein. Entsprechend kann die Motorabdeckung vorzugsweise nicht unmittelbar (sondern z. B. nur mittelbar) an dem Leiterrahmen, der Motoreinrichtung und/oder dem Fahrerhaus angebunden sein.

Gemäß einem weiteren Aspekt kann das Nutzfahrzeug ferner ein Frontend-Modul (z. B. mit einem Kühler und/oder Crashstrukturen) aufweisen. Das Frontend-Modul kann dabei mittels der mindestens eine Motorabdeckungshalterung an dem Leiterrahmen gehalten sein. Entsprechend kann die mindestens eine Motorabdeckungshalterung zusätzlich zum Halten der Motorabdeckung ferner auch zum Halten des Frontend-Moduls ausgebildet sein. Auf vorteilhafte Weise kann dadurch eine platz- und/oder komponentensparende Doppelnutzung der mindestens eine Motorabdeckungshalterung erreicht werden.

Nach einem weiteren Aspekt kann die Motorabdeckung zumindest eine (z. B. langgestreckte und/oder längliche) Versteifungsrippe aufweisen, mittels derer die Motorabdeckung versteift sein kann. Beispielsweise kann die Motorabdeckung abschnittsweise bzw. im Bereich der Versteifungsrippe eine stärkere Verpressung zur Erhöhung der Steifigkeit der Motorabdeckung aufweisen. Entsprechend kann die Motorabdeckung im Bereich der Versteifungsrippe einen im Vergleich zur restlichen Motorabdeckung reduzierten Querschnitt aufweisen. Auf vorteilhafte Weise kann dadurch eine möglichst steife bzw. selbsttragende Motorabdeckung bereitgestellt werden.

Gemäß einem weiteren Aspekt kann die Motorabdeckung zumindest einen (z. B. metallischen) Bügel zum Einhängen eines Kranhakens einer Hebeeinrichtung zum Herausheben der Motorabdeckung aus dem Nutzfahrzeug aufweisen. Bevorzugt ist der zumindest eine Bügel dabei an einer der Motoreinrichtung abgewandten Oberseite der Motorabdeckung angeordnet. Auf vorteilhafte Weise kann dadurch der Ausbau (und Einbau) der Motorabdeckung vereinfacht werden.

Nach einem weiteren Aspekt kann die Motorabdeckung zumindest abschnittsweise formangepasst zu einer Außenkontur (z. B. einer Oberseite) der Motoreinrichtung ausgebildet sein. Beispielsweise kann die Motorabdeckung (z. B. eine der Motoreinrichtung zugewandte Unterseite der Motorabdeckung) eine Form aufweisen, die zumindest abschnittsweise an die Außenkontur der Motoreinrichtung angepasst ist.

Zudem oder alternativ kann die Motorabdeckung als (z. B. flächiges) Formteil ausgebildet sein, welches die Motoreinrichtung von oben (z. B. ausschließlich von oben) abdeckt, vorzugsweise im Wesentlichen vollständig. Beispielsweise kann die Motorabdeckung zur Abdeckung einer Motoreinrichtungsoberseite ausgebildet sein.

Zudem oder alternativ kann die Motorabdeckung einen (z. B. nasenförmigen) Vorsprung aufweisen, in dem zumindest abschnittsweise ein Luftschlauch der Motoreinrichtung (z. B. formschlüssig) aufgenommen sein kann. Beispielsweise kann der Vorsprung zumindest abschnittsweise an eine Außenkontur des Luftschlauchs formangepasst sein.

Zudem oder alternativ kann die Motorabdeckung (z. B. ein einer Fahrzeugfront des Nutzfahrzeugs zugewandter Endbereich der Motorabdeckung) abschnittsweise rampenförmig (z. B. nach oben) ansteigend ausgebildet sein. Bevorzugt ist die Motorabdeckung somit nicht ausschließlich eben und/oder horizontal ausgeführt. Die Motorabdeckung bzw. der entsprechende Endbereich der Motorabdeckung kann dabei zumindest abschnittsweise eine Kühlereinrichtung (z. B. einen Kühlerlüfter) der Motoreinrichtung abdecken.

Zudem oder alternativ kann die Motorabdeckung (z. B. seitlich und/oder an einem einem Fahrzeugheck des Nutzfahrzeugs zugewandten Endbereich der Motorabdeckung) zumindest einen (z. B. nach unten) umgebogenen (z. B. flügelförmigen) Randabschnitt aufweisen. Beispielsweise kann sich die Motorabdeckung bzw. der entsprechende Endbereich zumindest abschnittsweise auch vertikal erstrecken. Bevorzugt ist allerdings die Haupterstreckungsebene der Motorabdeckung horizontal orientiert.

Gemäß einem weiteren Aspekt kann die Motorabdeckung zumindest eine Stützstange aufweisen. Die zumindest eine Stützstange kann dabei in einer Verstauposition an der Motorabdeckung arretierbar sein und/oder in eine Abstützposition bewegbar sein, in der die zumindest eine Stützstange die gelöste Motorabdeckung in einer gekippten Wartungsstellung hält. Auf vorteilhafte Weise kann dadurch auch im Fall, dass die Motorabdeckung nicht vollständig aus dem Nutzfahrzeug entnommen wird, eine sichere Wartung bzw. Reparatur der Motoreinrichtung ermöglicht werden.

Nach einem weiteren Aspekt kann die mindestens eine Motorabdeckungshalterung an dem Leiterrahmen angeschraubt und/oder angenietet sein.

Zudem oder alternativ kann die mindestens eine Motorabdeckungshalterung mehrere (z. B. vier) Motorabdeckungshalterungen aufweisen. Bevorzugt sind die mehrere Motorabdeckungshalterungen zumindest teilweise gleich ausgeführt. Beispielsweise können alle der mehreren Motorabdeckungshalterungen mittels Schnellverschlüssen mit der Motorabdeckung lösbar verbunden sein.

Zudem oder alternativ kann die Motoreinrichtung zwischen den zwei Hauptlängsträgern angeordnet sein. Beispielsweise kann die Motoreinrichtung zwischen dem ersten (z. B. linken) Hauptlängsträger und dem zweiten (z. B. rechten) Hauptlängsträger angeordnet sein. Weiterhin kann die Motoreinrichtung von den zwei Hauptlängsträgern getragen sein.

Gemäß einem weiteren Aspekt kann die Motorabdeckung einteilig und/oder offen ausgebildet sein. Auf vorteilhafte Weise kann dadurch eine einfach zu fertigende Motorabdeckung bereitgestellt werden.

Nach einem weiteren Aspekt kann die Motorabdeckung hitzebeständig sein und/oder aus einem hitzebeständigen Material gefertigt sein. Lediglich beispielhaft kann die Motorabdeckung dazu Glaswolle und/oder Steinwolle umfassen.

Ein weiterer unabhängiger Aspekt der vorliegenden Offenbarung betrifft ein Verfahren zum Inspizieren einer Motoreinrichtung eines hierin beschriebenen Nutzfahrzeugs. Folglich sollen alle vorstehend im Zusammenhang mit dem Nutzfahrzeug beschriebenen Aspekte auch im Zusammenhang mit dem Verfahren offenbart und beanspruchbar sein. Entsprechendes soll auch umgekehrt gelten.

Das Verfahren weist ein Lösen der Motorabdeckung von der mindestens einen Motorabdeckungshalterung auf. Bevorzugt erfolgt dies durch Lösen des zumindest einen Schnellverschlusses.

Das Verfahren weist ferner ein Abheben und/oder Wegkippen der gelösten Motorabdeckung von der Motoreinrichtung zum Freilegen der Motoreinrichtung auf. Auch dies kann bspw. händisch erfolgen. Alternativ dazu kann das Verfahren auch ein Einhängen eines Kranhakens einer Hebeeinrichtung in den zumindest einen Bügel der Motorabdeckung und ein Abheben und/oder Wegkippen der gelösten Motorabdeckung mittels der Hebeeinrichtung zum Freilegen der Motoreinrichtung umfassen.

Im Fall, dass die Motorabdeckung durch das Abheben und/oder Wegkippen nicht vollständig aus dem Nutzfahrzeug entnommen wurde, kann die Motorabdeckung optional auch mittels der zumindest eine Stützstange in einer gekippten Wartungsstellung fixiert werden. Entsprechend kann das Verfahren optional ein Fixieren der abgehobenen und/oder weggekippten Motorabdeckung mittels zumindest einer Stützstange umfassen.

Weiterhin weist das Verfahren ein Inspizieren der freigelegten Motoreinrichtung, bspw. ein Kontrollieren eines Ölstands der Motoreinrichtung, auf.

Gemäß einem Aspekt kann das Fahrerhaus des Nutzfahrzeugs kippbar sein und das Verfahren ferner ein Aufkippen des Fahrerhauses zum Freilegen der Motorabdeckung und/oder der mindestens einen Motorabdeckungshalterung vor dem Lösen der Motorabdeckung von der mindestens einen Motorabdeckungshalterung aufweisen. Beispielsweise kann das Fahrerhaus aus einer (z. B. vertikalen) Betriebsposition in eine (z. B. nach vorne gekippte) Wartungsposition (z. B. um eine horizontale Kippachse) geschwenkt werden, vorzugsweise um dadurch einen Zugang zur Motorabdeckung und/oder der mindestens einen Motorabdeckungshalterung zu ermöglichen bzw. diese Komponenten freizulegen.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1: eine schematische Darstellung eines Nutzfahrzeugs gemäß einer Ausführungsform;
- Figur 2: eine schematische Pseudo-3D-Darstellung eines Motorraums eines Nutzfahrzeugs gemäß einer Ausführungsform;
- Figur 3: eine Seitenansicht des Motorraums von Figur 2;
- Figur 4A: eine schematische Schnittdarstellung eines Wegkippens der gelösten Motorabdeckung gemäß einer Ausführungsform;
- Figur 4B: eine schematische Schnittdarstellung eines Wegkippens der gelösten Motorabdeckung gemäß einer weiteren Ausführungsform; und
- Figur 5: ein schematisches Flussdiagramm eines Verfahrens zum Inspizieren einer Motoreinrichtung eines Nutzfahrzeugs gemäß einer Ausführungsform.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

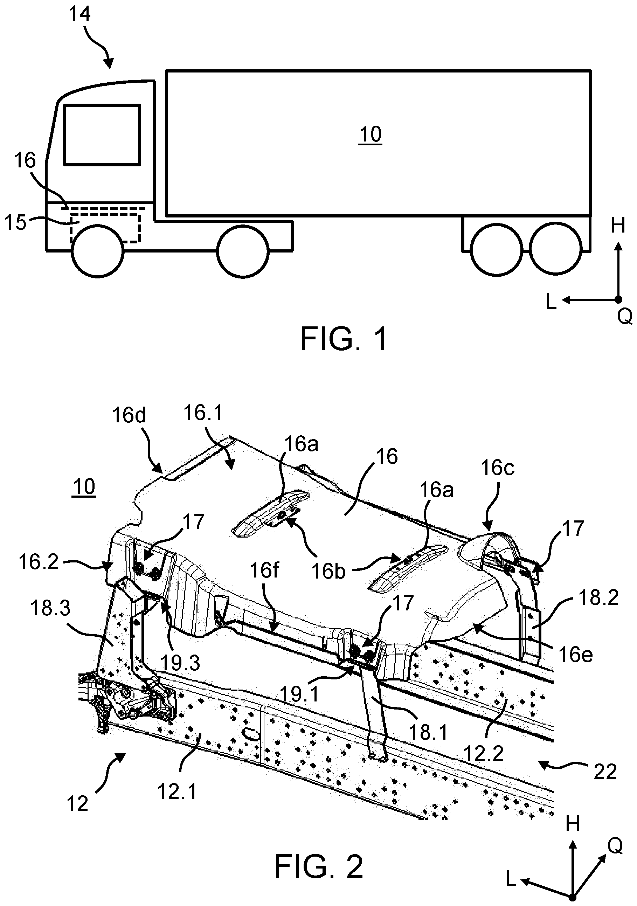

Die Figuren 1 bis 4B zeigen jeweils (zumindest ausschnittsweise) ein Nutzfahrzeug 10, bspw. in Form einer Sattelzugmaschine. Unter einem Nutzfahrzeug 10 kann dabei im Allgemeinen bspw. ein Fahrzeug verstanden werden, das durch seine Bauart und Einrichtung speziell zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder eine landwirtschaftliche Maschine sein.

Das Nutzfahrzeug 10 weist einen Leiterrahmen 12, ein Fahrerhaus 14, eine Motoreinrichtung 15, eine Motorabdeckung 16 und mindestens eine Motorabdeckungshalterung 18.1, 18.2, 18.3, 18.4 auf.

Der Leiterrahmen 12 kann das Fahrerhaus 14, die Motoreinrichtung 15, die Motorabdeckung 16 und die mindestens eine Motorabdeckungshalterung 18.1, 18.2, 18.3, 18.4 mittelbar oder unmittelbar tragen. Entsprechend können die vorgenannten Komponenten am Leiterrahmen 12 mittelbar oder unmittelbar befestigt sein. Weiterhin kann am Leiterrahmen 12 zumindest eine Achse und/oder weitere Aufbauten des Nutzfahrzeugs 10 befestigt sein.

Der Leiterrahmen 12 kann zwei (z. B. entlang der Fahrzeuglängsachse L orientierte) Hauptlängsträger 12.1, 12.2 umfassen (vgl. Figur 2). Diese können im Folgenden zur besseren Unterscheidung auch als erster (z. B. linker) Hauptlängsträger 12.1 und zweiter (z. B. rechter) Hauptlängsträger 12.2 bezeichnet werden.

Die zwei Hauptlängsträger 12.1, 12.2 sollen vorzugsweise gleich ausgebildet sein. Beispielsweise können die Hauptlängsträger 12.1, 12.2 jeweils als offene Profilträger (z. B. C-Profilträger) ausgebildet sein. Die zwei Hauptlängsträger 12.1, 12.2 können (z. B. in einem im Wesentlichen konstanten Abstand) voneinander beabstandet sein. Zwischen den zwei Hauptlängsträger 12.1, 12.2 kann somit ein Zwischenraum 22 ausgebildet sein.

Ferner kann der Leiterrahmen 12 mehrere (z. B. entlang der Fahrzeugquerachse Q orientierte) Querträger (nicht dargestellt) aufweisen, welche die zwei Hauptlängsträger 12.1, 12.2 miteinander verbinden. Beispielsweise kann jeder der mehreren Querträger jeweils ein erstes Ende aufweisen, das am ersten Hauptlängsträger 12.1 befestigt ist, und jeweils ein (z. B. dem jeweiligen ersten Ende entgegengesetztes) zweites Ende aufweisen, das am zweiten Hauptlängsträger 12.1 befestigt ist. Bevorzugt soll der Leiterrahmen 12 dadurch insgesamt selbsttragend sein.

Das Fahrerhaus 14 (vgl. Figur 1) kann einen (z. B. geschlossenen) Raum für den Fahrer und Begleitpersonen bilden. Das Fahrerhaus 14 kann durch einen Fahrerhausboden, ein Fahrerhausdach und mehrere Fahrerhausseitenwände begrenzt sein. Im Fahrerhaus 14 können Anzeige- und/oder Bedienelemente zur Fahrzeugführung, bspw. eine Instrumententafel, ein Lenkrad und/oder Fußpedale, angeordnet sein. Das Fahrerhaus 14 kann am Leiterrahmen 12, bspw. am ersten und zweiten Hauptlängsträger 12.1, 12.2, gelagert sein und/oder oberhalb des Leiterrahmens 12 angeordnet sein.

In einer bevorzugten Variante ist das Fahrerhaus 14 kippbar ausgeführt. Beispielsweise kann das Fahrerhaus 14 (z. B. mittels einer hydraulischen Kippvorrichtung) um eine (z. B. horizontale und/oder entlang der Fahrzeugquerachse Q verlaufende) Kippachse bewegbar sein, bspw. zwischen einer Betriebsposition und einer (z. B. nach vorne gekippten) Wartungsposition. Zudem oder alternativ kann das Fahrerhaus 14 auch verschiebbar oder anderweitig bewegbar ausgebildet sein.

Die Motoreinrichtung 15 (vgl. Figur 1) kann zwischen den zwei Hauptlängsträgern 12.1, 12.2 angeordnet sein, bspw. in dem Zwischenraum 22. Entsprechend kann der Zwischenraum 22 (zumindest abschnittsweise) einen Motorraum des Nutzfahrzeugs 10 bilden. Bevorzugt ist die Motoreinrichtung 15 (z. B. direkt) unterhalb des Fahrerhauses 14 angeordnet, bspw. (z. B. direkt) unterhalb des Fahrerhausbodens. Die Motoreinrichtung 15 kann bevorzugt als eine Brennkraftmaschine (z. B. Diesel-Brennkraftmaschine) ausgeführt sein. Entsprechend kann die Motoreinrichtung 15 einen Motorblock mit einem oder mehreren Zylindern, einen Zylinderkopf und/oder mehrere Gaswechselventile aufweisen. Ferner kann die Motoreinrichtung 15 zumindest einen Luftschlauch und/oder eine Kühlereinrichtung (z. B. einen Wärmetauscher mit Kühlerlüfter) aufweisen. Es ist allerdings auch möglich, dass die Motoreinrichtung 15 als Elektromotor und/oder Hydraulikmotor ausgeführt ist.

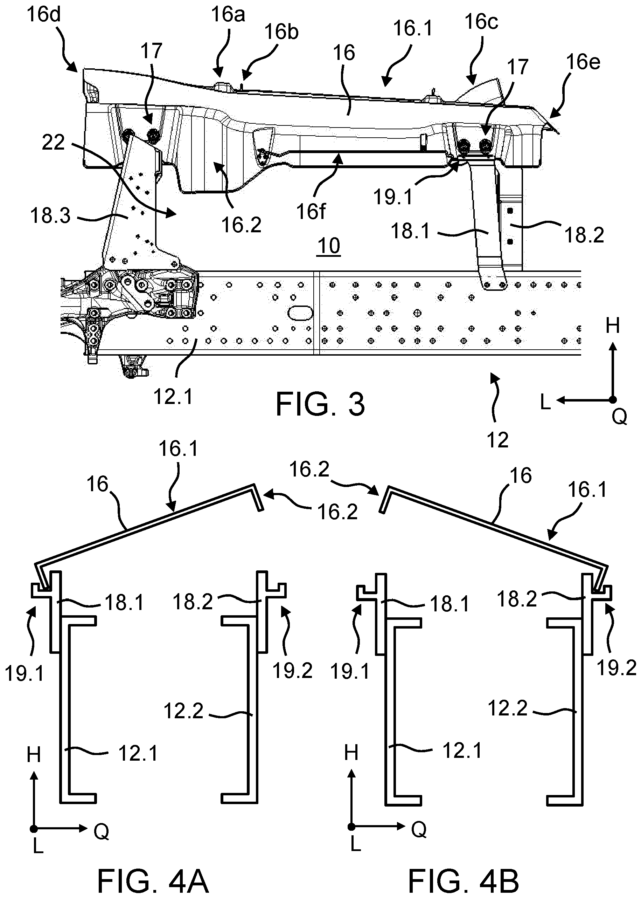

Die Motorabdeckung 16 (vgl. z. B. Figuren 2 und 3) dient zur Reduzierung von Motorgeräuschen zum Fahrerhaus 14 und/oder zur Reduzierung von Motorgeräuschen zur Umgebung des Nutzfahrzeugs 10 hin. Bevorzugt ist die Motorabdeckung 16 somit schalldämmend und/oder schalldämpfend ausgebildet. Beispielsweise kann die Motorabdeckung 16 aus einem schalldämmenden und/oder schalldämpfenden Material gefertigt sein.

Lediglich beispielhaft kann die Motorabdeckung 16 mineralische Fasern (z. B. Glaswolle und/oder Steinwolle) aufweisen. Beispielsweise können die mineralischen Fasern mittels Kleber und/oder Kunstharz zu einem Formteil verpresst sein. Die Motorabdeckung 16 bzw. das Formteil kann dabei offen ausgebildet sein. Beispielsweise kann die Motorabdeckung 16 bzw. das Formteil im Wesentlichen flächig und/oder dachförmig ausgebildet sein. Die Motorabdeckung 16 bzw. das Formteil kann bspw. eine Länge von mindestens 1 m, vorzugsweise mindestens 1.4 m, aufweisen und/oder eine Breite von mindestens 0.8 m, vorzugsweise mindestens 1.2 m, aufweisen.

Lediglich beispielhafte kann die Motorabdeckung 16 eine, z. B. im Wesentlichen horizontale, Deckfläche 16.1 aufweisen (vgl. z. B. Figuren 2 und 3). Die Deckfläche 16.1 kann im Wesentlichen senkrecht zur Fahrzeughochachse H orientiert und/oder angeordnet sein. Die Deckfläche 16.1 kann eine der Motoreinrichtung 15 zugewandte Unterseite und eine der Motoreinrichtung 15 abgewandte Oberseite aufweisen. Die Deckfläche 16.1 kann im Wesentlichen rechteckförmig ausgebildet sein und/oder eine Haupterstreckungsrichtung entlang der Fahrzeuglängsachse L aufweisen.

Bevorzugt ist die Motorabdeckung 16 (z. B. deren Deckfläche 16.1) zumindest abschnittsweise zwischen dem Fahrerhaus 14 und der Motoreinrichtung 15 angeordnet. Beispielsweise kann die Motorabdeckung 16 (z. B. deren Deckfläche 16.1) zwischen dem Fahrerhausboden und einer Oberseite der Motoreinrichtung 15 angeordnet sein. Entsprechend kann die Motorabdeckung 16 (z. B. deren Deckfläche 16.1) oberhalb der Motoreinrichtung 15 (z. B. oberhalb der Oberseite der Motoreinrichtung 15) und/oder unterhalb des Fahrerhaus 14 (z. B. unterhalb des Fahrerhausbodens) angeordnet sein. Die Motorabdeckung 16 (z. B. deren Deckfläche 16.1) kann die Motoreinrichtung 15 von oben (z. B. im Wesentlichen vollständig) abdecken. Hierbei kann die Motorabdeckung 16 (z. B. deren Deckfläche 16.1 bzw. die Unterseite der Deckfläche 16.1) zumindest abschnittsweise formangepasst zu einer Außenkontur der Motoreinrichtung 15 (z. B. einer Außenkontur der Oberseite der Motoreinrichtung 15) ausgebildet sein.

In einer Ausführungsform kann die Motorabdeckung 16 (z. B. deren Deckfläche 16.1) einen (z. B. nasenförmigen und/oder viertelkugelförmigen) Vorsprung 16c aufweisen (vgl. z. B. Figuren 2 und 3). Dieser kann von der Motorabdeckung 16 bzw. der Deckfläche 16.1 nach oben abragen und/oder im Bereich eines einem Fahrzeugheck des Nutzfahrzeugs 10 zugewandten Endbereich der Motorabdeckung 16 (z. B. der Deckfläche 16.1) angeordnet sein. In bzw. unter dem Vorsprung 16c kann zumindest abschnittsweise der Luftschlauch der Motoreinrichtung 15 aufgenommen und/oder angeordnet sein.

Weiterhin kann die Motorabdeckung 16 (z. B. deren Deckfläche 16.1) abschnittsweise rampenförmig (z. B. nach oben) ansteigend ausgebildet sein (vgl. z. B. Figuren 2 und 3). Beispielsweise kann ein einer Fahrzeugfront des Nutzfahrzeugs 10 zugewandter Endbereich 16d der Motorabdeckung 16 (z. B. deren Deckfläche 16.1) rampenförmig (z. B. nach oben) ansteigend ausgebildet sein. Unter dem rampenförmig ansteigenden Bereich der Motorabdeckung 16 bzw. der Deckfläche 16.1 kann zumindest abschnittsweise die Kühlereinrichtung (z. B. der Kühlerlüfter) der Motoreinrichtung 15 aufgenommen und/oder angeordnet sein.

Die Motorabdeckung 16 (z. B. deren Deckfläche 16.1) kann ferner zumindest eine Versteifungsrippe 16a aufweisen (vgl. z. B. Figuren 2 und 3). Mittels der zumindest eine Versteifungsrippe 16a kann die Motorabdeckung 16 (z. B. deren Deckfläche 16.1) versteift sein. Die zumindest eine Versteifungsrippe 16a kann eine langgestreckte und/oder längliche Form aufweisen und/oder wulstförmig ausgebildet sein. Die zumindest eine Versteifungsrippe 16a kann sich im Wesentlichen entlang der Fahrzeugquerachse Q erstrecken. Es ist allerdings auch möglich, dass sich die zumindest eine Versteifungsrippe 16a im Wesentlichen entlang der Fahrzeuglängsachse L erstreckt. Die zumindest eine Versteifungsrippe 16a kann nach oben von der Motorabdeckung 16 (z. B. deren Deckfläche 16.1) abragen. Bevorzugt weist die zumindest eine Versteifungsrippe 16a mehrere (z. B. zwei) Versteifungsrippen 16a auf, die bspw. an der Motorabdeckung 16 verteilt angeordnet sein können.

Die Motorabdeckung 16 (z. B. deren Deckfläche 16.1) kann weiterhin zumindest einen Bügel 16b aufweisen (vgl. z. B. Figuren 2 und 3). Bevorzugt dient der zumindest eine Bügel 16b zum Einhängen eines Kranhakens einer Hebeeinrichtung (nicht dargestellt) zum Herausheben der Motorabdeckung 16 aus dem Nutzfahrzeug 10. Der zumindest eine Bügel 16b kann eine ösenförmige Öffnung zum Einführen des Kranhakens begrenzen. Der zumindest eine Bügel 16b kann bspw. aus Metall und/oder einer Metalllegierung sein. Der zumindest eine Bügel 16b kann allerdigns auch aus dem gleichen Material wie die restliche Motorabdeckung 16 gefertigt sein. Der zumindest eine Bügel 16b kann nach oben von der Motorabdeckung 16 (z. B. von deren Deckfläche 16.1) abragen und/oder an einer Oberseite der Motorabdeckung 16 angeordnet sein. Bevorzugt weist der zumindest eine Bügel 16b mehrere (z. B. zwei) Bügel 16b auf, die bspw. an der Motorabdeckung 16 (z. B. deren Deckfläche) verteilt angeordnet sein können.

Ferner kann die Motorabdeckung 16 ein oder mehrere, z. B. im Wesentlichen vertikale, Seitenflächen 16.2 aufweisen (vgl. z. B. Figuren 2 und 3). Die Seitenflächen 16.2 können im Wesentlichen senkrecht zur Fahrzeugquerachse Q orientiert und/oder angeordnet sein. Die Seitenflächen 16.2 können integral-einstückig mit der Deckfläche 16.1 verbunden sein. Beispielsweise können die Seitenflächen 16.2 als (z. B. nach unten) umgebogene (z. B. flügelförmige) Randabschnitte 16e der Motorabdeckung 16 bzw. der Deckfläche 16.1 ausgebildet sein. In einer Ausführungsform kann bspw. ein seitlicher und/oder einem Fahrzeugheck des Nutzfahrzeugs 10 zugewandter Endbereich der Motorabdeckung 16 bzw. der Deckfläche 16.1 (z. B. nach unten) umgebogen sein.

Die Motorabdeckung 16 bzw. deren Seitenflächen 16.2 können die Motoreinrichtung 15 seitlich abdecken. Bevorzugt deckt die Motorabdeckung 16 bzw. deren Seitenflächen 16.2 die Motoreinrichtung 15 seitlich jedoch nicht vollständig ab. Entsprechend können die Seitenflächen 16.2 jeweils eine geringere Flächenausdehnung als die Deckfläche 16.1 aufweisen. Die Motorabdeckung 16 kann über eine oder mehrere der Seitenflächen 16.2 mit der mindestens eine Motorabdeckungshalterung 18.1, 18.2, 18.3, 18.4 verbunden sein. Entsprechend kann die mindestens eine Motorabdeckungshalterung 18.1, 18.2, 18.3, 18.4 an einer oder mehreren der Seitenflächen 16.2 angebunden sein.

Die mindestens eine Motorabdeckungshalterung 18.1, 18.2, 18.3, 18.4 dient bevorzugt dazu, die Motorabdeckung 16 chassisfest zu fixieren (vgl. z. B. Figuren 2 und 3). Entsprechend kann die Motorabdeckung 16 mittels der mindestens einen Motorabdeckungshalterung 18.1, 18.2, 18.3, 18.4 mit dem Leiterrahmen 12 verbunden sein. Bevorzugt ist die Motorabdeckung 16 dabei ausschließlich von der mindestens einen Motorabdeckungshalterung 18.1, 18.2, 18.3, 18.4 getragen. Die Motorabdeckung 16 kann somit vorzugsweise nicht zusätzlich an andere Komponenten angebunden sein.

In einer Ausführungsform weist die mindestens eine Motorabdeckungshalterung 18.1, 18.2, 18.3, 18.4, wie beispielhaft in Figur 2 und 3 dargestellt, mehrere Motorabdeckungshalterungen 18.1, 18.2, 18.3, 18.4 auf. Beispielsweise kann die mindestens eine Motorabdeckungshalterung 18.1, 18.2, 18.3, 18.4 vier Motorabdeckungshalterungen 18.1, 18.2, 18.3, 18.4 umfassen, welche zur besseren Unterscheidung auch als erste Motorabdeckungshalterung 18.1, zweite Motorabdeckungshalterung 18.2, dritte Motorabdeckungshalterung 18.3 und vierte Motorabdeckungshalterung 18.4 bezeichnet werden können.

Die Motorabdeckungshalterungen 18.1, 18.2, 18.3, 18.4 können (z. B. umfangsseitig) verteilt an der Motorabdeckung 16 angeordnet und/oder angebunden sein, z. B. an verschiedenen Randbereichen der Motorabdeckung 16. Entsprechend können die Motorabdeckungshalterungen 18.1, 18.2, 18.3, 18.4 voneinander beabstandet angeordnet sein. Beispielsweise können - in Bezug auf die Vorwärtsfahrtrichtung des Nutzfahrzeugs 10 - die erste Motorabdeckungshalterung 18.1 hinten links, die zweite Motorabdeckungshalterung 18.2 hinten rechts, die dritte Motorabdeckungshalterung 18.3 vorne links und die vierte Motorabdeckungshalterung 18.4 vorne rechts an der Motorabdeckung 16 angeordnet sein. Entsprechend können die erste und dritte Motorabdeckungshalterung 18.1, 18.3 am ersten Hauptlängsträger 12.1 befestigt (z. B. angeschraubt und/oder angenietet) sein und die zweite und vierte Motorabdeckungshalterung 18.2, 18.4 am zweiten Hauptlängsträger 12.2 befestigt (z. B. angeschraubt und/oder angenietet) sein.

Grundsätzlich können die mehreren Motorabdeckungshalterungen 18.1, 18.2, 18.3, 18.4 alle gleich ausgebildet sein. Die mehreren Motorabdeckungshalterungen 18.1, 18.2, 18.3, 18.4 können allerdings auch, wie dargestellt, teilweise unterschiedlich ausgebildet sein. Beispielsweise können sich die erste und zweite Motorabdeckungshalterungen 18.1, 18.2 in ihrem Aufbau von der dritten und vierten Motorabdeckungshalterungen 18.3, 18.4 unterscheiden. So können bspw. die erste und zweite Motorabdeckungshalterung 18.1, 18.2 ausschließlich zur Halterung der Motorabdeckung 16 dienen und/oder ausgebildet sein. Während bspw. die dritte und vierte Motorabdeckungshalterungen 18.3, 18.4 zusätzlich auch zur Halterung eines Frontend-Moduls (nicht dargestellt) dienen und/oder ausgebildet sein können. Entsprechend kann mittels der dritten und vierten Motorabdeckungshalterungen 18.3, 18.4 ein Frontend-Modul am Leiterrahmen 12 (z. B. am ersten und zweiten Hauptlängsträger 12.1, 12.2) gehalten sein. Jede der Motorabdeckungshalterungen 18.1, 18.2, 18.3, 18.4 kann ein erstes (z. B. unteres) Ende und ein (z. B. dem ersten Ende entgegengesetztes) zweites (z. B. oberes) Ende aufweisen. Jede der Motorabdeckungshalterungen 18.1, 18.2, 18.3, 18.4 kann über ihr jeweiliges erstes Ende (z. B. direkt) mit dem Leiterrahmen 12 (z. B. mit dem ersten oder zweiten Hauptlängsträger 12.1, 12.2) verbunden sein. Jede der Motorabdeckungshalterungen 18.1, 18.2, 18.3, 18.4 kann über ihr jeweiliges zweites Ende (z. B. direkt) mit der Motorabdeckung 16 lösbar verbunden sein.

Jede der Motorabdeckungshalterungen 18.1, 18.2, 18.3, 18.4 kann im Wesentlichen vertikal orientiert sein und/oder sich im Wesentlichen nach oben vom Leiterrahmen 12 wegerstrecken. Entsprechend kann jede der Motorabdeckungshalterungen 18.1, 18.2, 18.3, 18.4 (z. B. deren Haupterstreckungsrichtung und/oder Längsachse) im Wesentlichen parallel zur Fahrzeughochachse H ausgerichtet sein. Jede der Motorabdeckungshalterungen 18.1, 18.2, 18.3, 18.4 kann eine längliche und/oder langgestreckte Form aufweisen. Entsprechend kann die Motorabdeckung 16 mittels der Motorabdeckungshalterungen 18.1, 18.2, 18.3, 18.4 beabstandet von dem Leiterrahmen 12, z. B. oberhalb des Leiterrahmens 12, gehalten sein. Jede der Motorabdeckungshalterungen 18.1, 18.2, 18.3, 18.4 kann somit (z. B. zumindest abschnittsweise) zwischen dem Leiterrahmen 12 und der Motorabdeckung 16 bzw. zwischen dem Leiterrahmen 12 und dem Fahrerhaus 14 (z. B. dessen Fahrerhausboden) angeordnet sein.

Jede der Motorabdeckungshalterungen 18.1, 18.2, 18.3, 18.4 kann aus Metall und/oder einer Metalllegierung sein. Jede der Motorabdeckungshalterungen 18.1, 18.2, 18.3, 18.4 kann einen Profilabschnitt (z. B. Hohlprofilabschnitt) und/oder einen Leistenabschnitt aufweisen. Jede der Motorabdeckungshalterungen 18.1, 18.2, 18.3, 18.4 kann einteilig oder mehrteilig ausgebildet sein.

Das Nutzfahrzeug 10 kann mehrere Schnellverschlüsse 17 aufweisen (vgl. z. B. Figuren 2 und 3). Die Schnellverschlüsse 17 können bspw. Vierteldreh-Schnellverschlüsse sein, welche händisch oder mittels eines entsprechenden Werkezugs durch Drehen um eine Vierteldrehung ent- oder verriegelt werden können. Jede der Motorabdeckungshalterungen 18.1, 18.2, 18.3, 18.4 kann hierbei mittels zumindest eines Schnellverschlusses 17 mit der Motorabdeckung 16 (z. B. deren Seitenfläche 16.2) verbunden sein. Bevorzugt ist jede Motorabdeckungshalterung 18.1, 18.2, 18.3, 18.4 dabei mittels zwei Schnellverschlüssen 17 mit der Motorabdeckung 16 verbunden. Bevorzugt ist jeder der Schnellverschlüsse 17 dabei unverlierbar an der Motorabdeckung 16 angebracht. Insgesamt kann die Motorabdeckung 16 damit von den jeweiligen Motorabdeckungshalterungen 18.1, 18.2, 18.3, 18.4 lösbar sein, bspw. indem alle Schnellverschlüsse 17 der Motorabdeckungshalterungen 18.1, 18.2, 18.3, 18.4 gelöst werden.

Im gelösten Zustand kann die Motorabdeckung 16 aus dem Nutzfahrzeug 10 (z. B. vollständig) herausnehmbar sein, bspw. händisch oder mittels einer Hebeeinrichtung. Bevorzugt kann das Herausnehmen, z. B. bei aufgekipptem Fahrerhaus 14, nach oben erfolgen.

Zusätzlich oder alternativ zu einer vollständigen Demontage der Motorabdeckung 16 kann die gelöste Motorabdeckung 16 auch kippbar sein, was im Folgenden unter Bezugnahme auf die Figuren 4A und 4B eingehender beschrieben wird. So kann die gelöste Motorabdeckung 16 bspw. durch Anheben einer rechten Seite der Motorabdeckung 16 nach links kippbar sein (vgl. Figur 4A) und/oder durch Anheben einer linken Seite der Motorabdeckung 16 nach rechts kippbar sein (vgl. Figur 4B)

Bevorzugt weist jede der Motorabdeckungshalterungen 18.1, 18.2, 18.3, 18.4 dabei jeweils einen Halteschienenabschnitt 19.1, 19.2, 19.3, 19.4 auf, auf dem die gelöste Motorabdeckung 16 (z. B. kippbar) aufliegt oder auflegbar ist (vgl. z. B. Figuren 2, 3, 4A und 4B). Beispielsweise kann die erste Motorabdeckungshalterungen 18.1 einen ersten Halteschienenabschnitt 19.1, die zweite Motorabdeckungshalterung 18.2 einen zweiten Halteschienenabschnitt 19.2, die dritte Motorabdeckungshalterung 18.3 einen dritten Halteschienenabschnitt 19.3 und/oder die vierte Motorabdeckungshalterung 18.4 einen vierten Halteschienenabschnitt 19.1 aufweisen. Jeder der Halteschienenabschnitte 19.1, 19.2, 19.3, 19.4 kann im Wesentlichen horizontal orientiert sein und/oder sich nach außen von der jeweiligen Motorabdeckungshalterung 18.1, 18.2, 18.3, 18.4 wegerstrecken. Entsprechend kann jeder der Halteschienenabschnitte 19.1, 19.2, 19.3, 19.4 im Wesentlichen parallel zur Fahrzeugquerrichtung Q orientiert und/oder ausgerichtet sein. Jeder der Halteschienenabschnitte 19.1, 19.2, 19.3, 19.4 kann eine im Wesentlichen horizontale Auflagefläche aufweisen, auf welchen jeweils die gelöste Motorabdeckung 16 aufliegt oder auflegbar ist. Jede der Halteschienenabschnitte 19.1, 19.2, 19.3, 19.4 kann ferner einen (z. B. umgebogenen oder abgekanteten) Endabschnitt (vgl. z. B. Figuren 4A und 4B) aufweisen, der im Wesentlichen vertikal orientiert ist.

Wie in den Figuren 4A und 4B dargestellt, kann die gelöste Motorabdeckung 16 bspw. unter (z. B. gleichzeitiger) Abstützung auf der ersten und dritten Motorabdeckungshalterung 18.1 und 18.3, vorzugsweise unter (z. B. gleichzeitiger) Abstützung auf dem ersten und dritten Halteschienenabschnitt 19.1 und 19.3, nach links, d. h. weg von der zweiten und vierten Motorabdeckungshalterung 18.2 und 18.4, wegkippbar sein (vgl. Figur 4A).

Zudem oder alternativ kann die gelöste Motorabdeckung 16 bspw. auch unter (z. B. gleichzeitiger) Abstützung auf der zweiten und vierten Motorabdeckungshalterung 18.2 und 18.4, vorzugsweise unter (z. B. gleichzeitiger) Abstützung auf dem der zweiten und vierten Halteschienenabschnitt 19.2 und 19.4, nach rechts, d. h. weg von der ersten und dritten Motorabdeckungshalterung 18.1 und 18.3, wegkippbar sein (vgl. Figur 4B).

Um die weggekippte Motorabdeckung 16 bspw. in einer gekippten Wartungsstellung zu fixieren, kann die Motorabdeckung 16 ferner zumindest eine Stützstange 16f aufweisen (vgl. z. B. Figuren 2 und 3). Die Stützstange 16f kann bspw. aus Metall und/oder einer Metalllegierung sein. Die Stützstange 16f kann in einer (z. B. eingeklappten) Verstauposition an der Motorabdeckung 16 arretierbar sein. Beispielsweise kann die Motorabdeckung 16 hierzu einen entsprechenden Haken aufweisen. In der (z. B. ausgeklappten) Wartungsstellung kann die Stützstange 16f bspw. auf dem Leiterrahmen 12 abgestützt sein. Bevorzugt weist die zumindest eine Stützstange 16f zwei Stützstangen 16f auf, z. B. eine erste Stützstange und eine zweite Stützstange. Die zwei Stützstangen 16f können dabei an verschiedenen Seitenflächen der Motorabdeckung 16 angebracht sein. Beispielsweise kann die erste Stützstange an einer linken Seitenfläche und die zweite Stützstange an einer rechten Seitenfläche der Motorabdeckung 16 angebracht sein.

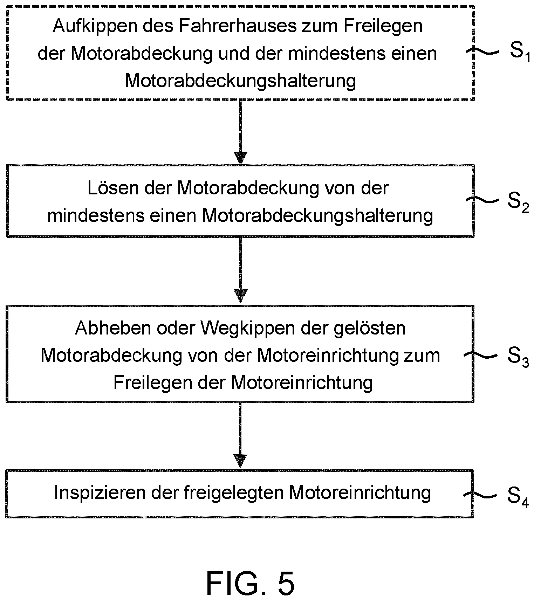

Figur 5 zeigt ein schematisches Flussdiagramm eines Verfahrens zum Inspizieren einer Motoreinrichtung 15 eines Nutzfahrzeugs 10. Bei dem Nutzfahrzeug 10 handelt es sich bevorzugt um ein Nutzfahrzeug 10 wie hierin beschrieben. Besonders bevorzugt weist das Nutzfahrzeug 10 dabei ein kippbares Fahrerhaus 14 auf.

Im optionalen Schritt S₁ erfolgt ein Aufkippen des Fahrerhauses 14 zum Freilegen der Motorabdeckung 15 und der mindestens einen Motorabdeckungshalterung 18.1, 18.2, 18.3, 18.4. Beispielsweise kann dies mittels einer hydraulischen Kippvorrichtung des Nutzfahrzeugs 10 erfolgen.

Im Schritt S₂ erfolgt ein, vorzugsweise werkzeugloses, Lösen der Motorabdeckung 16 von der mindestens einen Motorabdeckungshalterung 18.1, 18.2, 18.3, 18.4. Beispielsweise kann dies durch ein Lösen aller Schnellverschlüsse 17 erfolgen.

Im Schritt S₃ erfolgt ein Abheben und/oder Wegkippen der gelösten Motorabdeckung 16 von der Motoreinrichtung 15 zum Freilegen der Motoreinrichtung 15. Das Abheben und/oder Wegkippen kann bspw. händisch bzw. werkzeuglos erfolgen. Das Abheben und/oder Wegkippen kann allerdings auch mittels einer Hebeeinrichtung erfolgen. Hierbei kann bspw. ein Kranhaken der Hebeeinrichtung in den zumindest einen Bügel 16b der Motorabdeckung 16 eingehängt werden und die Motorabdeckung 16 mittels einer Hebeeinrichtung abgehoben und/oder weggekippt werden.

Im Schritt S₄ erfolgt ein Inspizieren der freigelegten Motoreinrichtung 15. Beispielsweise kann dies ein Ablesen ein Kontrollieren eines Ölstands der Motoreinrichtung 15 durch Herausziehen und Ablesen eines Ölpeilstabs der Motoreinrichtung 15 umfassen. Zusätzlich kann hierbei auch eine Motorennummer der Motoreinrichtung 15 abgelesen werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbei spiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Nutzfahrzeug
- 12: Leiterrahmen
- 12.1: Erster Hauptlängsträger
- 12.2: Zweiter Hauptlängsträger
- 14: Fahrerhaus
- 15: Motoreinrichtung
- 16: Motorabdeckung
- 16.1: Deckfläche
- 16.2: Seitenfläche
- 16a: Versteifungsrippe
- 16b: Bügel
- 16c: Vorsprung
- 16d: Endbereich
- 16e: Randabschnitt
- 16f: Stützstange
- 17: Schnellverschluss
- 18.1: Erste Motorabdeckungshalterung
- 18.2: Zweite Motorabdeckungshalterung
- 18.3: Dritte Motorabdeckungshalterung
- 18.4: Vierte Motorabdeckungshalterung
- 19.1: Erster Halteschienenabschnitt
- 19.2: Zweiter Halteschienenabschnitt
- 19.3: Dritter Halteschienenabschnitt
- 19.4: Vierter Halteschienenabschnitt
- 22: Zwischenraum
- H: Fahrzeughochachse
- Q: Fahrzeugquerachse
- L: Fahrzeuglängsachse

## Patentansprüche

1. Nutzfahrzeug (10), vorzugsweise Lastkraftwagen oder Sattelzugmaschine, aufweisend:
einen Leiterrahmen (12), aufweisend zwei Hauptlängsträger (12.1, 12.2);
ein Fahrerhaus (14), das vom Leiterrahmen (12) getragen ist;
eine Motoreinrichtung (15), vorzugsweise Brennkraftmaschine, wobei die Motoreinrichtung (15) unterhalb des Fahrerhauses (14) angeordnet ist;
eine zwischen dem Fahrerhaus (14) und der Motoreinrichtung (15) angeordnete Motorabdeckung (16) zur Reduzierung von Motorgeräuschen zum Fahrerhaus (14) hin; und
mindestens eine Motorabdeckungshalterung (18.1, 18.2, 18.3, 18.4), die am Leiterrahmen (12), vorzugsweise an einem oder beiden der zwei Hauptlängsträger (12.1, 12.2), befestigt ist und an welcher die Motorabdeckung (16) lösbar gehalten ist.

2. Nutzfahrzeug (10) nach Anspruch 1, wobei:
die Motorabdeckung (16) mittels zumindest eines Schnellverschlusses (17), vorzugsweise zumindest eines Vierteldreh-Schnellverschlusses, mit der mindestens einen Motorabdeckungshalterung (18.1, 18.2, 18.3, 18.4) lösbar verbunden ist, wobei vorzugsweise der zumindest eine Schnellverschluss (17) unverlierbar an der Motorabdeckung (16) angebracht ist.

3. Nutzfahrzeug (10) nach Anspruch 1 oder 2, wobei:
das Fahrerhaus (14) kippbar ist und die gelöste Motorabdeckung (16) bei aufgekipptem Fahrerhaus (14) aus dem Nutzfahrzeug (10) entnehmbar ist.

4. Nutzfahrzeug (10) nach einem der vorherigen Ansprüche, wobei:
die Motorabdeckung (16) schalldämmend und/oder schalldämpfend ist; und/oder
die Motorabdeckung (16) mineralische Fasern, vorzugsweise Glaswolle und/oder Steinwolle, aufweist; und/oder
die Motorabdeckung (16) ausschließlich oder im Wesentlichen zur Reduzierung von Motorgeräuschen zum Fahrerhaus (14) hin dient.

5. Nutzfahrzeug (10) nach einem der vorherigen Ansprüche, wobei:
die mindestens eine Motorabdeckungshalterung (18.1, 18.2, 18.3, 18.4) einen Halteschienenabschnitt (19.1, 19.2, 19.3, 19.4) aufweist, auf dem die gelöste Motorabdeckung (16), vorzugsweise kippbar, aufliegt oder auflegbar ist.

6. Nutzfahrzeug (10) nach einem der vorherigen Ansprüche, wobei:
die zwei Hauptlängsträger (12.1, 12.2) einen ersten Hauptlängsträger (12.1) und einen zweiten Hauptlängsträger (12.2) aufweisen;
die mindestens eine Motorabdeckungshalterung (18.1, 18.2, 18.3, 18.4) eine erste Motorabdeckungshalterung (18.1) und eine zweite Motorabdeckungshalterung (18.2) aufweist, wobei die erste Motorabdeckungshalterung (18.1) am ersten Hauptlängsträger (12.1) und die zweite Motorabdeckungshalterung (18.2) am zweiten Hauptlängsträger (12.2) befestigt ist; und
die Motorabdeckung (16) einen Zwischenraum (22) zwischen dem ersten Hauptlängsträger (12.1) und dem zweiten Hauptlängsträger (12.2) überspannt.

7. Nutzfahrzeug (10) nach Anspruch 6, wobei:
die erste Motorabdeckungshalterung (18.1), vorzugsweise ein erster Halteschienenabschnitt (19.1) der ersten Motorabdeckungshalterung (18.1), und die zweite Motorabdeckungshalterung (18.2), vorzugsweise ein zweiter Halteschienenabschnitt (19.2) der zweiten Motorabdeckungshalterung (18.2), ausgebildet sind, dass die gelöste Motorabdeckung (16):
- unter Abstützung auf der ersten Motorabdeckungshalterung (18.1), vorzugsweise auf deren ersten Halteschienenabschnitt (19.1), von der zweiten Motorabdeckungshalterung (18.2) wegkippbar ist; und/oder
- unter Abstützung auf der zweiten Motorabdeckungshalterung (18.2), vorzugsweise auf deren zweiten Halteschienenabschnitt (19.2), von der ersten Motorabdeckungshalterung (18.1) wegkippbar ist.

8. Nutzfahrzeug (10) nach einem der vorherigen Ansprüche, wobei:
die Motorabdeckung (16), vorzugsweise ausschließlich, von der mindestens einen Motorabdeckungshalterung (18.1, 18.2, 18.3, 18.4) getragen ist; und/oder
die Motorabdeckung (16) oberhalb der Motoreinrichtung (15) und/oder unterhalb eines Fahrerhausbodens des Fahrerhauses (14) angeordnet ist; und/oder
die Motorabdeckung (16) von der mindestens einen Motorabdeckungshalterung (18.1, 18.2, 18.3, 18.4) beabstandet von dem Leiterrahmen (12), von der Motoreinrichtung (15), und/oder von dem Fahrerhaus (14) gehalten ist.

9. Nutzfahrzeug (10) nach einem der vorherigen Ansprüche, ferner aufweisend:
ein Frontend-Modul, das mittels der mindestens eine Motorabdeckungshalterung (18.1, 18.2, 18.3, 18.4) am Leiterrahmen (12) gehalten ist.

10. Nutzfahrzeug (10) nach einem der vorherigen Ansprüche, wobei:
die Motorabdeckung (16) zumindest eine, vorzugsweise langgestreckte, Versteifungsrippe (16a), aufweist, mittels derer die Motorabdeckung (16) versteift ist; und/oder
die Motorabdeckung (16) zumindest einen Bügel (16b) zum Einhängen eines Kranhakens einer Hebeeinrichtung zum Herausheben der Motorabdeckung (16) aus dem Nutzfahrzeug (10) aufweist.

11. Nutzfahrzeug (10) nach einem der vorherigen Ansprüche, wobei:
die Motorabdeckung (16) zumindest abschnittsweise formangepasst zu einer Außenkontur, vorzugsweise einer Oberseite, der Motoreinrichtung (15) ausgebildet ist; und/oder
die Motorabdeckung (16) als flächiges Formteil ausgebildet ist, das die Motoreinrichtung (15) von oben, vorzugsweise ausschließlich von oben, abdeckt, vorzugsweise im Wesentlichen vollständig; und/oder
die Motorabdeckung (16) einen, vorzugsweise nasenförmigen, Vorsprung (16c) aufweist, in dem zumindest abschnittsweise ein Luftschlauch der Motoreinrichtung (15), vorzugsweise formschlüssig, aufgenommen ist; und/oder
die Motorabdeckung (16), vorzugsweise ein einer Fahrzeugfront des Nutzfahrzeugs (10) zugewandter Endbereich (16d) der Motorabdeckung (16), abschnittsweise rampenförmig ansteigend ausgebildet ist, und vorzugsweise zumindest abschnittsweise eine Kühlereinrichtung der Motoreinrichtung (15) abdeckt; und/oder
die Motorabdeckung (16), vorzugsweise seitlich und/oder an einem, einem Fahrzeugheck des Nutzfahrzeugs (10) zugewandten Endbereich der Motorabdeckung (16), zumindest einen, vorzugsweise nach unten, umgebogenen Randabschnitt (16e) aufweist

12. Nutzfahrzeug (10) nach einem der vorherigen Ansprüche, wobei:
die Motorabdeckung (16) zumindest eine Stützstange (16f) aufweist, die in einer Verstauposition an der Motorabdeckung (16) arretierbar ist und in eine Abstützposition bewegbar ist, in der die zumindest eine Stützstange (16f) die gelöste Motorabdeckung (16) in einer gekippten Wartungsstellung hält.

13. Nutzfahrzeug (10) nach einem der vorherigen Ansprüche, wobei:
die mindestens eine Motorabdeckungshalterung (18.1, 18.2, 18.3, 18.4) am Leiterrahmen (12) angeschraubt und/oder angenietet ist; und/oder
die mindestens eine Motorabdeckungshalterung (18.1, 18.2, 18.3, 18.4) mehrere, vorzugsweise vier, Motorabdeckungshalterungen (18.1, 18.2, 18.3, 18.4) aufweist, die vorzugsweise alle mittels Schnellverschlüssen (17) mit der Motorabdeckung (16) lösbar verbunden sind; und/oder
die Motoreinrichtung (15) zwischen den zwei Hauptlängsträgern (12.1, 12.2) angeordnet ist.

14. Verfahren zum Inspizieren einer Motoreinrichtung (15) eines Nutzfahrzeugs (10), nach einem der vorherigen Ansprüche, wobei das Verfahren aufweist:
- Lösen der Motorabdeckung (16) von der mindestens einen Motorabdeckungshalterung (18.1, 18.2, 18.3, 18.4);
- Abheben oder Wegkippen der gelösten Motorabdeckung (16) von der Motoreinrichtung (15) zum Freilegen der Motoreinrichtung (15); und
- Inspizieren der freigelegten Motoreinrichtung (15), vorzugsweise Kontrollieren eines Ölstands der Motoreinrichtung (15).

15. Verfahren nach Anspruch 14, wobei das Fahrerhaus (14) kippbar ist und das Verfahren ferner aufweist:
- Aufkippen des Fahrerhauses (14) zum Freilegen der Motorabdeckung (15) und der mindestens einen Motorabdeckungshalterung (18.1, 18.2, 18.3, 18.4) vor dem Lösen der Motorabdeckung (16) von der mindestens einen Motorabdeckungshalterung (18.1, 18.2, 18.3, 18.4).
